# EUROPEAN PATENT APPLICATION

(11) **EP 1 553 342 A1**
(43) Date of publication of application: **13.07.2005**
(21) Application number: 03380312.3
(22) Date of filing: 31.12.2003
(51) Int. Cl.: F22B 1/28, F22B 37/78, G01F 23/30

(54) **Pressurized steam generator**

(71) Applicant: Electrodomesticos Taurus S.L., 25790 Oliana (Lleida) (ES)
(72) Inventor: Torregasa Prat, Josep, 25790 Oliana (Lleida) (ES); Alet Vidal, Josep, 25790 Oliana (Lleida) (ES); Porta Roset, Francesc, 25790 Oliana (Lleida) (ES); Trench Roca, Lluis, 25790 Oliana (Lleida) (ES)
(74) Representative: Manresa Val, Manuel

(57) **Abstract**

It comprises a tank (1) for water storage (15), a first pipe (3) that pipes the water from the mentioned tank to a pump (2), a second pipe (4) that pipes the referred water from the indicated pump (3) to a boiler (5) that heats up the water (16) inside it for producing water steam (17), and at least a third pipe (6) that pipes the mentioned water steam (17) from the boiler (5) in order to be used, as for example, in a steam iron (7), and that the mentioned boiler (5) is provided with a direct level sensor (9) and in that the alluded device for the detection of the water level is a sensor capable of measuring in direct way the water level inside the boiler.

## Description

Pressurized steam generator, as for example an ironing centre, that comprises a tank for water storage to atmospheric pressure, a first pipe that pipes water from the mentioned tank to a pump, a second pipe that pipes the referred water from the mentioned pump to a boiler that heats up the water inside the boiler for the production of pressurized water steam, and at least a third pipe that pipes the referred water steam from the boiler in order to be used as for example in a steam iron. And where the mentioned second pipe connects to the boiler by at least one point in the surface of the boiler, located in at least one of the sidewalls of the boiler, below the mean water level inside the boiler, and in lower half of the boiler.

### BACKGROUNDS OF THE INVENTION

It is known in the state of the art different patents that cover pressurized steam generators, specially for irons.

It is in the state of the art the EP 0772000, of 1996, in the name of the firm SEB, S.A., that refers to A steam generator with automatic supply having a level sensor arranged in a zone of a vessel located at a set threshold level. An indirect level sensor measuring the temperature (that works mesurising the water temperature) is positioned in a boiler area, located in a level of the threshold level. Measures the temperature and comparing it with a reference temperature, in order to establish whether a liquid reaches the threshold level. Adjustment means acting in relation to the steam tapping operations so that the sensor temperature varies in relation to the level of liquid over a variation range, wherein the reference temperature remains within the variation range. It is an application of the ironing systems.

It is in the state of the art too, EP 0595292, filed in 1993, in the name of PLANETA HAUSGERATE GMBH & CO, ELEKTROTECHNIK KG. Combined steam generator, preferably for ironing appliances and cleaning apparatuses, for professional and non-professional use comprising a pressure chamber having a built-in or built-on heating element, a refilling device, an underpressure safety mechanism, a discharge (drain) device, a control valve for the escaping steam flow, and an overpressure safety mechanism. The heating element has a special resistance/temperature characteristic which lends to the steam generator self-cleaning properties which keep the pressure and the temperature of the generated steam largely independent of the final steam quantity, of the temperature of the water fed and of the supply voltage of the heating element. One or more mounting devices are provided on the steam generator.

It is known too EP 0877200, in the name of the firm IMETEC, S.p.A., filed in 1997, that refers to a household electrical steam generator, particularly for smoothing irons, where the water level within the boiler is stabilized by electronic and/or pneumatic action, electronic action being actuated by a temperature sensor (not a direct water level) positioned on that portion of the body of a usual armoured resistance element which is subject to emergence following reduction in the water level, to activate a make-up micro-pump transferring into the boiler cold water drawn from a reservoir, pneumatic action being actuated by a floating valve enabling air to enter during boiler cooling, in order not to enable the boiler to draw water from the reservoir through the body of the halted micro-pump.

Lastly, it is necessary to refer to the EP 0855555, filed in 1997 too, in the name of Mr Mauro Biancalani. This invention refers to steam generators too, characterizes in that the boiler, which supplies the steam to a flexible pipe for the iron, is located on a moving member which oscillates about a horizontal hinging axis and is supported by a spring; with the reduction in the quantity of water inside the boiler, the moving member is raised by the spring (indirect level detection because the sensor is sensitive only to the mass of the mass of the set) and acts on a microswitch which operates an electric pump for supplying a limited quantity of water to the boiler via a flexible pipe.

### BRIEF DESCRIPTION OF THE INVENTION

The present invention is a considerable advance in the sector of the steam generators since it increases the benefits of this type of household electrical apparatus, at the same time that reduces the electrical expenses, being for that reason in the long run more efficient, economic and lasting apparatus during the time.

Thus, the inventors have observed, after innumerable tests, two types of effects:
A) that if the cold water coming from the tank is introduced into the boiler, so that that this cold water makes contact only with the hot water of the boiler, the effect of leak of steam pressure of the boiler is smaller than the one it would cause if this cold water makes contact with the steam.
B) that if the amount of water introduced into the boiler is restricted to small doses, (although these loads of the boiler are more repetitive), also reduces the "thermal shock" effect, that derives in a leak of pressure.

In reference to the first effect, the inventors have observed that if they enter the water into the boiler through the base or one of the sidewalls of the boiler, the purpose of the 1st effect is obtained.

In connection to the second effect, if inside the boiler a level tight sensor is introduced, for example those of the buoy-float type, although they could suitably be of other types, it is possible to inject to the boiler small amounts of water, fitting the cycle of hysteresis referring to the sensitivity of the same one.

In addition, in connection to the second effect, if as a result of an abnormal operation of the steam generator, for any reason, the boiler had the risk of remaining without water, the level sensor would send this information to the processor that could stop the ironing centre immediately.

To all the advantages previously mentioned, it can be added its simplicity, its solidness and the fact that by its special configuration, in the long run it must give a very few repairs to is user.

### BRIEF DESCRIPTION OF THE DRAWINGS

With the purpose to facilitate the explanation two sheets of drawings are attached to the present description, in which a practical case of an embodiment has been reproduced, which is mentioned only for exemplificative, non limitative of the scope of the present invention:
- figure 1 shows a scheme of the pressurized steam generator object of the present invention, and
- figure 2 shows a detailed view of the level detection system.

### PREFERRED EMBODIMENT OF THE PATENT APPLICATION

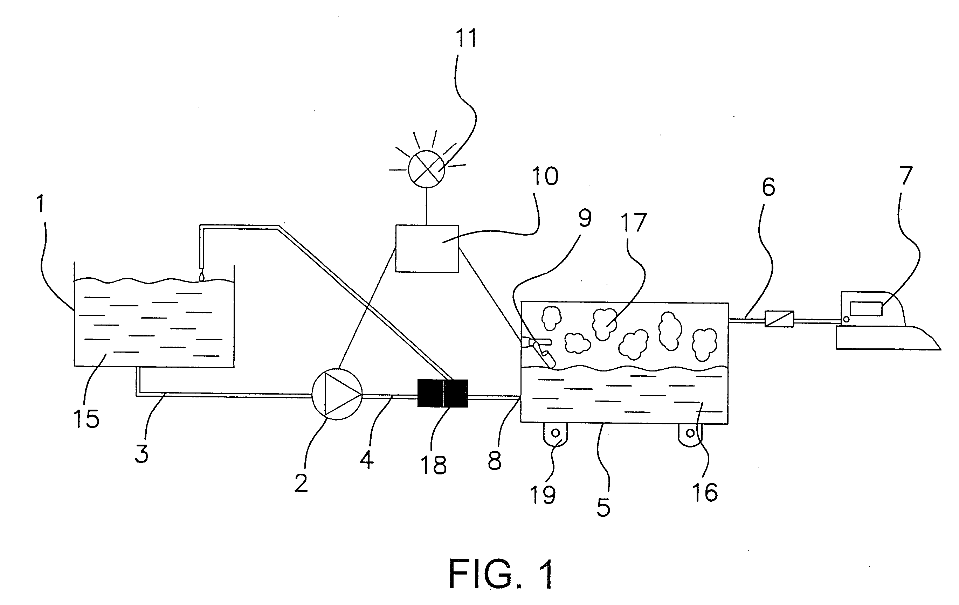

Thus in figure 1 it is shown a tank 1 with water 15 inside, a first pipe 3, a pump 2, a second pipe 4, a primer 18, means for heating 19 the water, a boiler 5 with water 16 and water steam 17 inside it, a third pipe 6, a steam iron 7, a connection point 8 in the surface of the boiler, acoustic or/and visual means 11, a processor 10 and a level sensor 9.

In a preferred embodiment, water 15 pertaining to tank 1 is lead until the pump 2 by means of the first pipe 3. Once the pump 2 receives an order of the processor 10, this one feeds an amount of water, predetermined or previously calculated by the processor 10, to the boiler 5, by means of the second pipe 4 and entering into the boiler by at least one connection point 8 in the surface of boiler 5, located in at least one of the sidewalls of the boiler, below the mean water level inside the boiler, and in lower half of the boiler.

The inventors have observed that if the amounts of water that are introduced into the boiler 5, in proportion to the amount of existing water 16 inside the boiler, are not great amounts, the "thermal shock" effect is avoided. Also the entrance by the lower part of boiler 5, permits to control the thermal density currents and the liquefied of the water steam 17.

When the water 16 is inside the boiler 5, this is heated up, it is produced water steam 17 that by means of the third pipe 6, located in the upper part of the boiler 5, pipes this steam to the steam iron 7.

When the level sensor 9 detects that the water level 16 inside of the boiler has been reduced a predetermined amount, equivalent to the minimum amount of water without the "thermal shock" takes place, sends this information to the processor 10 and this orders to the pump 2 to feed water, in the amount predetermined by the processor 10, to the boiler 5.

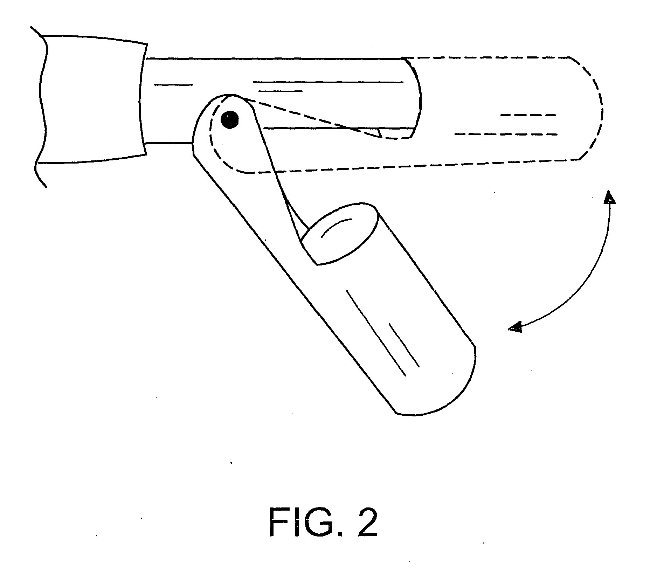

On the contrary if the level sensor 9, for example buoy-float (figure 2), detects that the lost amount of water 16 inside the boiler 5 is abnormally reduced, for example as a result of a failure in the pump, or because there is no water 15 in the tank 1, it will send this information to the processor 10, that immediately will stop the operation of the apparatus.

At the same time it will send a signal to the acoustic and/or visual means 11 so that they will warn to the user about the incident.

It has been thought, although not limitatively, in a level sensor 9, float type (fig.2), because this one is not sensible to the hardnesses water, acting indifferently if it is a hardnesses water or not.

The present patent describes a new pressurized steam generator. The examples mentioned here are not limitatives of the present invention, for that reason it will be able to have different applications and/or be adapted, all of them within the scope of the following claims.

## Claims

1. Pressurized steam generator, of the type that comprises a tank (1) for water storage (15), a first pipe (3) that pipes the water from the mentioned tank to a pump (2), a second pipe (4) that pipes the referred water from the indicated pump (3) to a boiler (5) that heats up the water (16) inside it for producing water steam (17), and at least a third pipe
(6) that pipes the mentioned water steam (17) from the boiler (5) in order to be used, as for example, in a steam iron (7), and that the mentioned boiler (5) is provided with direct level sensor (9) **characterized in that** the alluded device for the detection of the water level is a sensor capable of measuring in direct way the water level inside the boiler.

2. Pressurized steam generator in accordance with claim 1 **characterized in that** the referred water level sensor of the boiler (9), can be adjusted to a cycle of hysteresis which allows the feeding of small doses of water that come from the tank, without any apparent leak of steam pressure.

3. Pressurized steam generator in accordance with claim 1 **characterized in that** the referred second pipe (4) connects to the boiler (5) by at least one point (8) in the surface of the boiler, located:
- in at least one of the sidewalls of the boiler,
- below the mean water level inside the boiler, and
- in lower half of the boiler.

4. Pressurized steam generator in accordance with claim 1 **characterized in that** when the processor (10) is informed by the level sensor (9) about the existence of an abnormally high or low level of water inside the boiler (5), the referred processor (10) switches off the apparatus.

5. Pressurized steam generator in accordance with at least one of the previous claims **characterized in that** the level sensor (9) is a buoy-float (figure 2).
